Europäisches Patentamt

European Patent Office

Office européen des brevets

(19)

(11) Numéro de publication : **0 341 106 B1**

(12) ## FASCICULE DE BREVET EUROPEEN

(45) Date de publication du fascicule du brevet :
**09.09.92 Bulletin 92/37**

(51) Int. Cl.$^5$ : **C01B 35/04**

(21) Numéro de dépôt : **89400983.6**

(22) Date de dépôt : **11.04.89**

(54) **Procédé de préparation de borures de terres rares.**

(30) Priorité : **22.04.88 FR 8805332**

(43) Date de publication de la demande :
**08.11.89 Bulletin 89/45**

(45) Mention de la délivrance du brevet :
**09.09.92 Bulletin 92/37**

(84) Etats contractants désignés :
**AT BE CH DE ES FR GB GR IT LI LU NL SE**

(56) Documents cités :
**NL-A- 6 804 216
US-A- 4 260 525
CHEMICAL ABSTRACTS, vol. 91, no. 18, 29
octobre 1979, page 255, résumé no. 144907c,
Columbus, Ohio, US; Y.M. KARTVELISHVILIet
al.: "Production of chromium borides", &
VYSOKOTEMP. BORIDY SILITSIDY 1978, 36-9**

(73) Titulaire : **RHONE-POULENC CHIMIE
25, quai Paul Doumer
F-92408 Courbevoie Cédex (FR)**

(72) Inventeur : **Iltis, Alain
13, rue des Noyers
F-93300 - Aubervilliers (FR)**
Inventeur : **Maestro, Patrick
27, rue Honoré de Balzac
F-95470 - Fosses (FR)**

(74) Mandataire : **Dutruc-Rosset, Marie-Claude et
al
RHONE-POULENC CHIMIE Service Brevets
Chimie 25, Quai Paul Doumer
F-92408 Courbevoie Cédex (FR)**

EP 0 341 106 B1

Jouve, 18, rue Saint-Denis, 75001 PARIS

## Description

La présente invention a trait à un procédé de préparation de borures de terres rares.

L'expression "terres rares" utilisée conformément à l'invention comprend les éléments de terres rares appelés lanthanides ayant des numéros atomiques de 57 à 71 inclus et l'yttrium de numéro atomique égal à 39.

Les borures de terres rares sont des produits connus comme ayant des propriétés électriques intéressantes. En particulier, l'hexaborure de lanthane possède d'excellentes propriétés d'émission thermoionique et est utilisé comme cathode émissive dans les dispositifs de haute énergie.

Actuellement, le développement industriel des borures de terres rares est limité en raison de la difficulté d'obtention d'un produit présentant une pureté satisfaisante selon un procédé extrapolable à l'échelle industrielle.

Il est connu de préparer le borure de lanthane par réduction du sesquioxyde de lanthane à l'aide du carbure de bore ou de bore élémentaire, sous pression réduite [cf. G. A. Meerson et al - Izv. Akad. Nauk. SSSR Neorg. Mater $\underline{3}$ n° 5 p. 802-806 (1967)]. Toutefois, les réactions étant conduites à des températures supérieures à 1500°C, ceci impose non seulement de faire appel à un creuset en graphite, mais de disposer d'un four ayant un revêtement en graphite.

On a également proposé selon US-A 3 902 973 de préparer les borures de terres rares, par électrolyse d'une source de terre rare, en milieu sel fondu contenant une cryolite et un borate de métal alcalin. Un tel procédé de préparation est relativement complexe en raison d'une température d'électrolyse comprise entre 950°C et 1050°C et il se pose le problème classique de la récupération du borure de terre rare à la cathode qui, par ailleurs, présente une pollution due à la cryolithe.

On rencontre dans le procédé décrit dans US-A 4 260 525, le même problème de séparation du borure de terre rare obtenu : ledit procédé consiste à mélanger le composé carbonate, nitrate ou oxyde de terre rare, avec du bore, en présence d'aluminium pour dissoudre le bore à une température comprise entre 1200°C et 1600°C ; à chauffer le milieu réactionnel dans cette de température, à le refroidir, puis à séparer le borure de terre rare, de l'oxyde d'aluminium formé.

Pour pallier les inconvénients de séparation et de purification des produits obtenus selon les procédés décrits dans l'état de la technique, la demanderesse a proposé dans sa demande de brevet français n° 87/16396 un procédé de préparation d'un borure de terre rare caractérisé par le fait qu'il consiste à chauffer un chlorure de terre rare et du bore élémentaire.

La caractéristique du procédé, objet de ladite demande, est d'obtenir directement un borure de terre rare en chauffant un chlorure de terre rare et du bore élémentaire, car le seul produit secondaire formé est le chlorure de bore qui est volatil, dans les conditions de la réaction.

Un autre avantage du procédé décrit dans la demande de brevet français n° 87/16396 est qu'il peut être mis en oeuvre dans un appareillage classique, à savoir un four avec des briques réfractaires en alumine ou alumino-silicates car la température réactionnelle est relativement basse : elle peut être choisie inférieure à 1500°C et, de préférence, aux environs de 1200°C.

Les réactions conduisant à la synthèse de borures de terres rares se déroulant à une température relativement élevée, la demanderesse a cherché à obtenir un procédé plus économique en abaissant encore la température réactionnelle.

Il a maintenant été trouvé, et c'est ce qui constitue l'objet de la présente invention, un procédé de préparation d'un borure de terre rare caractérisé par le fait qu'il consiste à chauffer un halogénure de terre rare, de l'aluminium et du bore élémentaire.

Par halogénure de terre rare, on entend de préférence, un chlorure de terre rare ou un fluorure de terre rare.

Conformément à l'invention, les chlorures de terres rares sont choisis encore plus préférentiellement.

Un avantage appréciable du procédé de l'invention est que la mise en oeuvre de l'aluminium permet de diminuer la température réactionnelle de 100°C à 200°C. Ceci est particulièrement intéressant dans le cas de la mise en oeuvre d'un fluorure de terre rare car, en raison d'une cinétique lente, la réaction doit être conduite à une température élevée voisine, de préférence, supérieure à la température de fusion du fluorure de terre rare comprise le plus souvent entre 1300°C et 1500°C.

Un autre avantage du procédé de l'invention est qu'il ne pose pas de problème au niveau de la purification du borure de terre rare obtenu, car les produits secondaires formés qui sont $BX_3$ et $AlX_3$, sont tous les deux des composés volatils, dans les conditions réactionnelles.

Enfin, au autre intérêt du procédé de l'invention est que la mise en oeuvre de l'aluminium permet d'économiser la quantité de bore à introduire : ce dernier étant le plus coûteux des réactifs utilisés. La comparaison des équilibres réactionnels (1) et (2) intervenant respectivement dans le procédé de la présente invention et celui de la demande de brevet français n° 87/16 396, le met nettement en évidence

$$TRX_3 + nB + Al \rightarrow TR B_n + AlX_3 \quad (1)$$

$$TRCl_3 + (n+1) B \rightarrow TR B_n + BCl_3 \quad (2)$$

Dans la réaction (1), X symbolise l'atome d'halogène, n représente le nombre d'atomes de bore par atome de terre rare et est généralement égal à 4 ou 6.

Il est à noter que l'on a déjà décrit dans US-A 4 260 525 l'utilisation de l'aluminium dans un procédé de préparation de borure de terre rare qui consiste à mélanger un composé carbonate, nitrate ou oxyde de terre rare avec du bore.

Toutefois, l'aluminium n'est pas utilisé dans la même fonction car il sert avant tout à dissoudre le bore alors que, selon l'invention, il est employé comme réducteur du chlorure de terre rare.

De plus, une étape ultérieure de purification par attaque acide de l'aluminium est nécessaire pour récupérer le borure de terre rare formé.

Enfin, contrairement à l'invention, ce procédé conduit à des cristaux de borure de terre rare de taille macroscopique.

Conformément au procédé de l'invention, on fait appel à un chlorure d'une terre rare et/ou à un fluorure d'une terre rare. Il est également possible de mettre en oeuvre un mélange d'un chlorure et/ou d'un fluorure d'au moins deux terres rares.

Il est souhaitable que l'halogénure mis en oeuvre soit d'une grande pureté en particulier exempt d'impuretés oxygénées telles qu'un oxyde résiduaire.

On met en oeuvre, de préférence, un halogénure de terre rare ayant une pureté supérieure à 95 %.

Les fluorures de terres rares sont disponibles à l'état anhydre car ce sont des produits peu hygroscopiques.

Pour ce qui est des chlorures de terres rares, on peut faire appel à un chlorure qu'il soit sous forme anhydre ou hydratée. Il peut contenir une quantité résiduaire d'oxychlorure ou d'eau. On peut tolérer une quantité totale pouvant atteindre 20 % en poids.

D'une manière préférentielle, on soumet le chlorure de terre rare à une opération de séchage qui peut être effectuée à une température comprise entre 20°C et 200°C, de préférence aux environs de 100°C. Le séchage peut être réalisé notamment à l'air, ou, de préférence, sous pression réduite comprise par exemple entre 1 mm de mercure (= 133,322 Pa) et 100 mm de mercure (13,332,2 Pa).

La durée de séchage peut varier entre 2 et 24 heures.

Soit avant ou après cette opération de séchage, il est possible d'ajouter du chlorure d'ammonium pour faciliter la déshydration du chlorure de terre rare.

En ce qui concerne le bore, on peut avoir recours au bore élémentaire, sous forme amorphe ou cristallisé.

On fait appel, de préférence, à un bore exempt d'impuretés oxygénées. Pour ce qui est des impuretés métalliques, elles sont moins gênantes. En effet, la plupart de ces impuretés s'éliminent sous forme d'halogénure métallique gazeux au cours du procédé de l'invention. On peut mettre en oeuvre un bore ayant une pureté de 85 % et plus, commercialisé sous l'appellation bore technique.

Pour ce qui est de l'aluminium, on le met en oeuvre sous forme métallique, quelle que soit sa forme, poudre, grenaille, copeaux, etc...

On met en oeuvre, de préférence, de l'aluminium ayant une pureté supérieure à 95 % et exempt d'impuretés oxygénées.

On définit, ci-après, les proportions des différentes réactifs du procédé de l'invention.

La quantité de bore engagée exprimée par rapport à la quantité d'halogénure de terre rare est, de préférence, au plus égale à la quantité stoechiométrique réactionnelle et, encore plus préférentiellement, en léger défaut, pouvant atteindre de 10 à 20 % de la quantité stoechiométrique réactionnelle. Elle est fonction du borure de terre rare préparé.

Le rapport molaire entre le bore et l'halogénure de terre rare est au plus égal à 6,5 et, de préférence, compris entre 5,2 et 6,5 lors de la préparation d'un hexaborure de terre rare : il est au plus égal à 4,5 et, de préférence, compris entre 3,6 et 4,5 dans le cas de la préparation d'un tétraborure de terre rare.

La quantité d'aluminium mise en oeuvre exprimée par rapport à la quantité d'halogénure de terre rare est au plus égale à la quantité stoechiométrique réactionnelle et, de préférence, en léger défaut pouvant atteindre de 10 à 20 %.

La première étape du procédé de l'invention consiste à effectuer le mélange intime de l'halogénure de terre rare, du bore élémentaire et de l'aluminium. Il est préférable que le chlorure de terre rare soit séché au préalable. Ce mélange se fait par voie sèche.

On soumet ensuite le mélange de poudres obtenu à un traitement thermique. Lorsque l'halogénure de terre rare mis en oeuvre est un chlorure de terre rare, la réaction est effectuée à une température comprise entre 1000°C et 1300°C, de préférence entre 1050°C et 1150°C. Dans le cas de la mise en oeuvre d'un fluorure de terre rare, la température réactionnelle est choisie entre 1000°C et 1400°C, de préférence entre 1200 et 1300°C.

On effectue la réaction à la pression atmosphérique, mais sous atmosphère de gaz réducteurs et/ou de gaz inertes. C'est ainsi que l'on peut faire appel à l'halogène et à l'argon, seuls ou en mélange.

On maintient l'atmosphère des gaz précités, tout au cours de la réaction.

La durée de la réaction est fonction de la capacité de l'appareillage et de son aptitude à monter rapidement en température. Généralement, une fois la température souhaitée atteinte, on la maintient pendant une durée variable de 1 à 4 heures, et, de préférence, comprise entre 1 heure et 2 heures.

Au cours de la réaction, il y a formation d'un borure de terre rare et dégagement gazeux majoritaire de chlorure d'aluminium éventuellement accompagné d'une faible quantité d'halogénure de bore, voire même d'oxyhalogénure de bore. Les gaz formés peuvent être piégés, par exemple, par barbotage dans l'eau.

On procède ensuite au refroidissement de la masse réactionnelle jusqu'à température ambiante (15 à 25°C). Il est réalisé sous atmosphère de gaz réducteurs et/ou de gaz inertes tant que la température réactionnelle n'est pas inférieure à 300°C.

On récupère directement un borure de terre rare.

Il peut être souhaitable d'effectuer un ou plusieurs lavages à l'eau, de préférence de un à trois, des halogénures qui peuvent être présents, à titre d'impuretés. A cet effet, on met le produit en suspension dans l'eau, puis l'on effectue sa séparation selon les techniques classiques de séparation solide/liquide, en particulier filtration, décantation, essorage.

Conformément au procédé de l'invention, on obtient un borure de terre rare. Plus précisément, il s'agit d'un hexaborure de terre rare ou d'un tétraborure de terre rare selon les quantités stoechiométriques mises en oeuvre. L'hexaborure de terre rare a une maille élémentaire cubique du type CsCl. Quant au tétraborure de terre rare, il cristallise dans le système quadratique.

Le procédé de l'invention peut être mis en oeuvre dans un appareillage classique.

Le mélange de l'halogénure de terre rare, de l'aluminium et du bore peut être fait dans un mélangeur à poudres de type connu : mélangeurs à chute libre du type tambour, mélangeurs verticaux ou horizontaux à vis hélicoïdale, mélangeurs horizontaux type Lödige, etc... ou dans tout type de broyeur classique tel qu'un broyeur à billes ou à boulets.

Le mélange obtenu est placé dans une nacelle ou un creuset qui peut être en alumine, zircone, carbone vitreux ou, de préférence, en graphite, puis l'ensemble est introduit dans un four à chambre, tunnel, à moufles ou rotatif présentant un revêtement réfractaire classique (alumine ou alumino-silicates). Ce four est équipé d'un dispositif permettant de réguler la température au cours du traitement thermique. Il doit être étanche et permettre la circulation des gaz (hydrogène, inertes). Il y a lieu de prévoir un dispositif destiné à la récupération des dégagements gazeux, par exemple, une tour de lavage.

On donne, ci-après, des exemples de réalisation de l'invention présentés à titre illustratif, sans aucun caractère limitatif.

<u>Exemple 1</u>

<u>Préparation de l'hexaborure de cérium</u>

On commence par sécher le chlorure de cérium $CeCl_3,7H_2O$ (pureté 99,5 %) pendant 24 heures, à une température de 100°C et sous pression réduite de 1000 Pa.

On fait le mélange de 31,9 g dudit produit avec 6,48 g de bore cristallisé commercialisé par la Société PROLABO, ayant une pureté de 98 % et présentant une taille de particules variant de 25 à 63 $\mu$m et 2,5 g d'aluminium (pureté 99 %) commercialisé par la Société PROLABO, soit un léger défaut d'aluminium par rapport à la stoechiométrie.

On introduit ensuite ce mélange dans un creuset en graphite que l'on place dans un four tubulaire à revêtement réfractaire en alumine dans lequel on établit un balayage d'argon contenant 10 % en volume d'hydrogène.

On monte la température jusqu'à 1300°C et on la maintient pendant deux heures.

On laisse ensuite refroidir la masse réactionnelle à l'inertie du four, le balayage gazeux étant maintenu jusqu'à ce que la température devienne inférieure à 300°C.

On obtient 22 g d'un produit bleu-violet.

On effectue un lavage du produit obtenue par mise en suspension dans l'eau afin d'éliminer toute trace de chlorure.

Le produit obtenu est l'hexaborure de cérium ayant un diagramme de diffraction RX conforme à la fiche ASTM 11670.

On obtient une poudre ayant un diamètre moyen de particules de 19$\mu$m après délitage des agglomérats aux ultra-sons pendant deux minutes.

Exemple 2

Préparation du tétraborure d'yttrium

On commence par sécher le chlorure d'yttrium $YCl_3,7H_2O$ (pureté 99,5 %) pendant 24 heures, à une température de 100°C et sous pression réduite de 1000 Pa.

On fait le mélange de 21,8 g dudit produit avec 5,55 g de bore cristallisé commercialisé par la Société PROLABO, ayant une pureté de 98 % et présentant une taille de particules variant de 25 à 63 μm et 2,5 g d'aluminium (pureté 99 %) commercialisé par la Société PROLABO, soit un léger défaut d'aluminium par rapport à la stoechiométrie.

On introduit ensuite ce mélange dans un creuset en graphite que l'on place dans un four tubulaire à revêtement réfractaire en alumine dans lequel on établit un balayage d'argon contenant 10 % en volume d'hydrogène.

On monte la température jusqu'à 1050°C et on la maintient pendant deux heures.

On laisse ensuite refroidir la masse réactionnelle à l'inertie du four, le balayage gazeux étant maintenu jusqu'à ce que la température devienne inférieure à 300°C.

On obtient 13,5g de tétraborure d'yttrium.

On effectue un lavage du produit obtenu par mise en suspension dans l'eau afin d'éliminer toute trace de chlorure.

Le produit obtenu présente un diagramme de diffraction RX conforme à la fiche ASTM 7-57.

Exemple 3

Préparation de l'hexaborure de cérium

On fait le mélange de 1,97 g de fluorure de cérium $CeF_3$, avec 0,66 g de bore cristallisé commercialisé par la Société PROLABO, ayant une pureté de 98 % et présentant une taille de particules variant de 25 à 63 μm et 0,27 g d'aluminium (pureté 99 %) commercialisé par la Société PROLABO, soit un léger défaut d'aluminium par rapport à la stoechiométrie.

On introduit ensuite ce mélange dans un creuset en graphite que l'on place dans un four tubulaire à revêtement réfractaire en alumine dans lequel on établit un balayage d'argon

On monte la température jusqu'à 1300°C et on la maintient pendant deux heures.

On laisse ensuite refroidir la masse réactionnelle à l'inertie du four, le balayage gazeux étant maintenu jusqu'à ce que la température devienne inférieure à 300°C.

On obtient 2,0 g d'hexaborure de cérium.

Le produit obtenu est l'hexaborure de cérium ayant un diagramme de diffraction RX conforme à la fiche ASTM 11670.

**Revendications**

1.  Procédé de préparation d'un borure d'une terre rare caractérisé par le fait qu'il consiste à chauffer un halogénure de terre rare, de l'aluminium et du bore élémentaire.

2.  Procédé selon la revendication 1, caractérisé par le fait que le borure de terre rare est un borure de lanthanides ou d'yttrium.

3.  Procédé selon l'une des revendications 1 et 2 caractérisé par le fait que le borure de terre rare est un hexaborure de terre rare.

4.  Procédé selon l'une des revendications 1 et 2 caractérisé par le fait que le borure de terre rare est un tétraborure de terre rare.

5.  Procédé selon l'une des revendications 1 à 4 caractérisé par le fait que le borure de terre rare est l'hexaborure de cérium, le tétraborure d'yttrium.

6. Procédé selon l'une des revendications 1 à 5 caractérisé par le fait que l'halogénure de terre rare est un chlorure de terre rare.

7. Procédé selon l'une des revendications 1 à 5 caractérisé par le fait que l'halogénure de terre rare est un fluorure de terre rare.

8. Procédé selon l'une des revendications 1 à 7 caractérisé par le fait que l'halogénure de terre rare est un mélange d'un chlorure et/ou d'un fluorure d'au moins deux terres rares.

9. Procédé selon l'une des revendications 6 et 8 caractérisé par le fait que le chlorure de terre rare est soumis à un séchage entre 20°C et 200°C à l'air ou sous pression réduite.

10. Procédé selon l'une des revendications 1 à 9 caractérisé par le fait que la quantité de bore exprimée par rapport à la quantité d'halogénure de terre rare est au plus égale à la quantité stoechiométrique.

11. Procédé selon la revindication 10 caractérisé par le fait que ladite quantité de bore est en léger défaut pouvant atteindre de 10 à 20 % de la quantité stoechiométrique réactionnelle.

12. Procédé selon l'une des revendications 3, 10 et 11 caractérisé par le fait que le rapport molaire entre le bore et l'halogénure de terre rare est compris entre 5,2 et 6,5.

13. Procédé selon l'une des revendications 4, 10 et 11 caractérisé par le fait que le rapport molaire entre le bore et l'halogénure de terre rare est compris entre 3,6 et 4,5.

14. Procédé selon l'une des revendications 1 à 13 caractérisé par le fait que la quantité d'aluminium exprimée par rapport à la quantité d'halogénure de terre rare est au plus égale à la quantité stoechiométrique.

15. Procédé selon la revendication 14 caractérisé par le fait que ladite quantité est en léger défaut pouvant atteindre de 10 à 20 % de la quantité stoechiométrique réactionnelle.

16. Procédé selon la revendication 6 caractérisé par le fait que la réaction est effectuée entre 1000°C et 1300°C.

17. Procédé selon la revendication 16 caractérisé par le fait que ladite température est comprise entre 1050°C et 1150°C.

18. Procédé selon la revendication 7 caractérisé par le fait que la réaction est effectuée entre 1000°C et 1400°C.

19. Procédé selon la revendication 18 caractérisé par le fait que ladite température est comprise entre 1200°C et 1300°C.

20. Procédé selon l'une des revendications 1 à 19 caractérisé par le fait que l'on conduit la réaction sous atmosphère d'hydrogène et/ou de gaz inertes.

21. Procédé selon la revendication 20 caractérisé par le fait que l'on conduit la réaction sous atmosphère d'hydrogène et/ou d'argon.

22. Procédé selon l'une des revendications 1 à 21 caractérisé par le fait que la durée de la réaction varie de 1 à 4 heures.

23. Procédé selon la revendication 22 caractérisé par le fait que ladite durée est comprise entre 1 et 2 heures.

24. Procédé selon l'une des revendications 1 à 23 caractérisé par le fait que l'on procède au refroidissement de la masse réactionnelle jusqu'à une température de 300°C, sous atmosphère de gaz réducteurs et/ou de gaz inertes.

25. Procédé selon l'une des revendications 1 à 24 caractérisé par le fait que l'on récupère le borure de terre rare, après refroidissement jusqu'à température ambiante (15 à 25°C).

26. Procédé selon l'une des revendications 1 à 25 caractérisé par le fait que l'on soumet le produit obtenu à un ou plusieurs lavages à l'eau.

## Patentansprüche

1. Verfahren zur Herstellung eines SE-borids, dadurch gekennzeichnet, daß man ein SE-halogenid, Aluminium und elementares Bor miteinander erhitzt.

2. Verfahren nach Anspruch 1, dadurch gekennzeichnet, daß das SE-borid ein Lanthanidenborid oder Yttriumborid ist.

3. Verfahren nach einem der Ansprüche 1 und 2, dadurch gekennzeichnet, daß das SE-borid ein SE-hexaborid ist.

4. Verfahren nach einem der Ansprüche 1 und 2, dadurch gekennzeichnet, daß das SE-borid ein SE-tetraborid ist.

5. Verfahren nach einem der Ansprüche 1 bis 4, dadurch gekennzeichnet, daß das SE-borid Cerhexaborid oder Yttriumtetraborid ist.

6. Verfahren nach einem der Ansprüche 1 bis 5, dadurch gekennzeichnet, daß daß SE-halogenid ein SE-chlorid ist.

7. Verfahren nach einem der Ansprüche 1 bis 5, dadurch gekennzeichnet, daß daß SE-halogenid ein SE-fluorid ist.

8. Verfahren nach einem der Ansprüche 1 bis 7, dadurch gekennzeichnet, daß das SE-halogenid ein Gemisch eines Chlorids und/oder Fluoride von mindestens zwei Seltenen Erden ist.

9. Verfahren nach einem der Ansprüche 6 und 8, dadurch gekennzeichnet, daß das SE-chlorid bei 20 bis 200°C an der Luft oder unter vermindertem Druck getrocknet wird.

10. Verfahren nach einem der Ansprüche 1 bis 9, dadurch gekennzeichnet, daß die Menge an Bor, bezogen auf die Menge an SE-halogenid, höchstens gleich ist der stöchiometrischen Menge.

11. Verfahren nach Anspruch 10, dadurch gekennzeichnet, daß Bor im leichten Unterschuß bis zu 10 bis 20% der stöchiometrischen Menge der Reaktion vorhanden ist.

12. Verfahren nach einem der Ansprüche 3, 10 und 11, dadurch gekennzeichnet, daß das Molverhältnis zwischen Bor und SE-halogenid im Bereich von 5,2 bis 6,5 liegt.

13. Verfahren nach einem der Ansprüche 4, 10 und 11, dadurch gekennzeichnet, daß das Molverhältnis zwischen Bor und SE-halogenid im Bereich von 3,6 bis 4,5 liegt.

14. Verfahren nach einem der Ansprüche 1 bis 13, dadurch gekennzeichnet, daß die Menge Aluminium, bezogen auf die Menge SE-halogenid, höchstens gleich ist der stöchiometrischen Menge.

15. Verfahren nach Anspruch 14, dadurch gekennzeichnet, daß die Menge einen leichten Unterschuß bis zu 10 bis 20% der stöchiometrischen Menge der Reaktion ausmacht.

16. Verfahren nach Anspruch 6, dadurch gekennzeichnet, daß die Reaktion bei 1000 bis 1300°C durchgeführt wird.

17. Verfahren nach Anspruch 16, dadurch gekennzeichnet, daß die Temperatur 1050 bis 1150°C ausmacht.

18. Verfahren nach Anspruch 7, dadurch gekennzeichnet, daß die Reaktion bei 1000 bis 1400°C durchgeführt wird.

19. Verfahren nach Anspruch 18, dadurch gekennzeichnet, daß die Temperatur 1200 bis 1300°C beträgt.

20. Verfahren nach einem der Ansprüche 1 bis 19, dadurch gekennzeichnet, daß man die Reaktion unter Wasserstoffatmosphäre und/oder Inertgasen durchführt.

21. Verfahren nach Anspruch 20, dadurch gekennzeichnet, daß man die Reaktion unter Wasserstoff- und/oder Argonatmosphäre durchführt.

22. Verfahren nach einem der Ansprüche 1 bis 21, dadurch gekennzeichnet, daß die Reaktionsdauer 1 bis 4 h beträgt.

23. Verfahren nach Anspruch 22, dadurch gekennzeichnet, daß die Dauer 1 bis 2 h beträgt.

24. Verfahren nach einem der Ansprüche 1 bis 23, dadurch gekennzeichnet, daß man die Reaktionsmasse bis auf eine Temperatur von 300°C unter einer reduzierenden Gasatmosphäre und/oder unter Inertgasen abkühlt.

25. Verfahren nach einem der Ansprüche 1 bis 24, dadurch gekennzeichnet, daß man das SE-borid nach Abkühlen bis auf Raumtemperatur (15 bis 25°C) gewinnt bzw. isoliert.

26. Verfahren nach einem der Ansprüche 1 bis 25, dadurch gekennzeichnet, daß man das Produkt einmal oder mehrere Male mit Wasser wäscht.

## Claims

1. Process for the preparation of a rare earth boride, characterized in that it consists of heating a rare earth halide, aluminium and elementary boron.

2. Process according to claim 1, characterized in that the rare earth boride is a lanthanide or yttrium boride.

3. Process according to one of the claims 1 and 2, characterized in that the rare earth boride is a rare earth hexaboride.

4. Process according to one of the claims 1 and 2, characterized in that the rare earth boride is a rare earth tetraboride.

5. Process according to one of the claims 1 to 4, characterized in that the rare earth boride is cerium hexaboride or yttrium tetraboride.

6. Process according to one of the claims 1 to 5, characterized in that the rare earth halide is a rare earth chloride.

7. Process according to one of the claims 1 to 5, characterized in that the rare earth halide is a rare earth fluoride.

8. Process according to one of the claims 1 to 7, characterized in that the rare earth halide is a mixture of a chloride and/or a fluoride of at least two rare earths.

9. Process according to one of the claims 6 and 8, characterized in that the rare earth chloride undergoes a drying operation at between 20 and 200°C in air or under reduced pressure.

10. Process according to one of the claims 1 to 9, characterized in that the boron quantity, expressed relative to the rare earth halide quantity, is at the most equal to the stoichiometric quantity.

11. Process according to claim 10, characterized in that the boron quantity is in a slight deficiency, which can reach 10 to 20% of the reaction stoichiometric quantity.

12. Process according to one of the claims 3, 10 and 11, characterized in that the molar ratio between the boron and the rare earth halide is between 5.2 and 6.5.

13. Process according to one of the claims 4, 10 and 11, characterized in that the molar ratio between the boron and the rare earth halide is between 3.6 and 4.5.

14. Process according to one of the claims 1 to 13, characterized in that the aluminium quantity, expressed relative to the rare earth halide quantity, is at the most equal to the stoichiometric quantity.

15. Process according to claim 14, characterized in that said quantity is a slight deficiency able to reach 10 to 20% of the reaction stoichiometric quantity.

16. Process according to claim 6, characterized in that the reaction is performed at between 1000 and 1300°C.

17. Process according to claim 16, characterized ,in that the temperature is between 1050 and 1150°C.

18. Process according to claim 7, characterized in that the reaction is performed at between 1000 and 1400°C.

19. Process according to claim 18, characterized in that the temperature is between 1200 and 1300°C.

20. Process according to one of the claims 1 to 19, characterized in that the reaction is performed under an atmosphere of hydrogen and/or inert gases.

21. Process according to claim 20, characterized in that the reaction is performed under an atmosphere of hydrogen and/or argon.

22. Process according to one of the claims 1 to 21, characterized in that the reaction lasts between 1 and 4 hours.

23. Process according to claim 22, characterized in that the duration is 1 to 2 hours.

24. Process according to one of the claims 1 to 23, characterized in that the reaction mass is cooled to a temperature of 300°C, under a reducing and/or inert gas atmosphere.

25. Process according to one of the claims 1 to 24, characterized in that the rare earth boride is recovered after cooling to ambient temperature (15 to 25°C).

26. Process according to one of the claims 1 to 25, characterized in that the product obtained undergoes one or more washing operations with water.